(19) Europäisches Patentamt
European Patent Office
Office européen des brevets

(11) Veröffentlichungsnummer: **0 014 323**
**A1**

# (12) EUROPÄISCHE PATENTANMELDUNG

(21) Anmeldenummer: 80100104.1

(22) Anmeldetag: 10.01.80

(51) Int. Cl.³: **C 08 G 63/62**

(30) Priorität: 17.01.79 DE 2901668

(43) Veröffentlichungstag der Anmeldung:
20.08.80 Patentblatt 80/17

(84) Benannte Vertragsstaaten:
DE FR GB IT NL

(71) Anmelder: BAYER AG
Zentralbereich Patente, Marken und Lizenzen
D-5090 Leverkusen 1, Bayerwerk(DE)

(72) Erfinder: Serini, Volker, Dr.
Scheiblerstrasse 81
D-4150 Krefeld(DE)

(72) Erfinder: Freitag, Dieter, Dr.
Hasenheide 10
D-4150 Krefeld(DE)

(72) Erfinder: Bottenbruch, Ludwig, Dr.
Wöhlerstrasse 5
D-4150 Krefeld(DE)

(72) Erfinder: Rudolph, Hans, Dr.
Haydnstrasse 9
D-4150 Krefeld(DE)

## (54) Verfahren zur Herstellung von aromatischen Polycarbonaten aus o,o,o',o'-tetramethylsubstituierten Diphenolen.

(57) Gegenstand der vorliegenden Erfindung ist ein Verfahren zur Herstellung von Polycarbonaten aus bifunktionellen Polycarbonatstruktureinheiten der Formeln 1 und/oder 2,

(1) 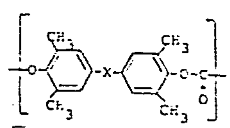

(2) 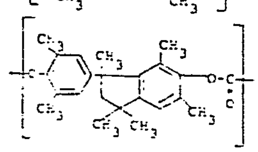

worin X eine Alkylen- oder Alkylidengruppe mit 1 - 5 C-Atomen ist.

EP 0 014 323 A1

Bayer Aktiengesellschaft
Zentralbereich
Patente, Marken und Lizenzen

D 5090 Leverkusen, Bayerwerk

PS/kl

Verfahren zur Herstellung von aromatischen Polycarbonaten aus o,o,o',o'-tetramethylsubstituierten Diphenolen

Gegenstand der vorliegenden Erfindung ist ein Verfahren zur Herstellung von Polycarbonaten aus bifunktionellen Polycarbonatstruktureinheiten der Formeln 1 und/oder 2,

(1) 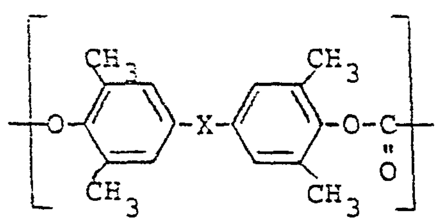

(2) 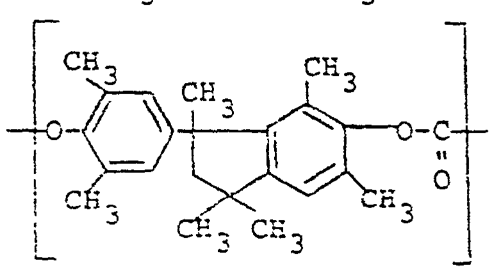

worin X eine Alkylen- oder Alkylidengruppe mit 1 - 5 C-Atomen ist, die einen mittleren Polykondensationsgrad $\bar{P}$ von mindestens 35 haben, wobei sich $\bar{P}$ auf identische oder nicht identische Struktureinheiten der Formeln 1 und 2 bezieht, oder ein mittleres Molekulargewicht $\bar{M}w$ (Gewichtsmittelmolekulargewicht) von mindestens 21 000 besitzen, bestehend in der Umsetzung der Alkalisalze von Diphenolen der Formeln 3 und/oder 4, worin X die für Formel 1

(3) 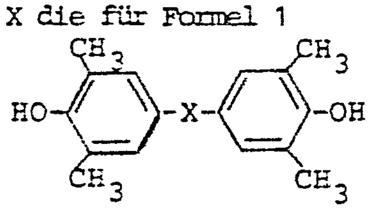

(4) 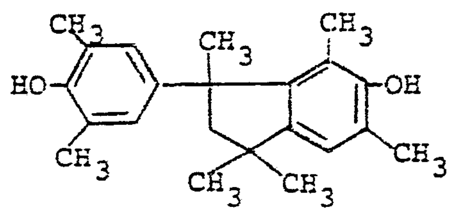

genannte Bedeutung hat, mit Phosgen nach dem Phasengrenzflächenverfahren gegebenenfalls unter Mitverwendung von Kettenbegrenzern und gegebenenfalls von Verzweigern, welches dadurch gekennzeichnet ist, daß

a) tertiäre, vorzugsweise tertiäre aliphatische Amine in Mengen von 1 bis 7 Mol-%, bezogen auf Mole an eingesetzten Diphenolen der Formeln 2 und/oder 4 eingesetzt werden, daß

b) die Polycarbonatkonzentration in der organischen Phase nach beendeter Polykondensation zwischen 18 und 50 Gew.-% (Gewicht Polycarbonat pro Gesamtgewicht an organischer Phase) beträgt, und daß

c) das Verhältnis der Volumina von organischer Phase zu wäßriger Phase nach beendeter Polykondensation zwischen 5 zu 1 und 1 zu 1,2 liegt.

Die in Rede stehenden Polycarbonate können mit Erfolg bislang nur gemäß DT-OS 2 063 050 (Le A 13 359) erhalten werden, wobei jedoch große Mengen an tertiären Aminen (zwischen 10 und 200 Mol-%, bezogen auf Mole Diphenole) einzusetzen sind und die Reaktionszeit von 0,1 bis 5 Stunden so zu wählen ist, daß das Produkt aus Aminmenge und Reaktionszeit den Wert 15 Stunden x Mol-% übersteigt, sofern Produkte mit großem Polykondensationsgrad und praktisch ohne Chlorkohlensäureesterendgruppen synthetisiert werden sollen.

Das Verfahren der DT-OS 2 063 050 ist daher für die großtechnische Herstellung der in Rede stehenden Polycarbonate nicht sehr günstig.

In der DT-OS 2 615 038 (Le A 16 842) werden Polycarbonate mit 0,5 bis 100 Mol-% an Struktureinheiten der Formel (2) beschrieben, wobei gemäß Seite 5 dieser DT-OS die Herstellung auf verschiedene Weise erfolgen kann. Für Produkte, die ausschließlich Struktureinheiten der Formel (2) und gegebenenfalls der Formel (1) enthalten, ist bislang hierbei das Herstellungsverfahren gemäß bereits oben diskutierter DT-OS 2 063 050 anzuwenden.

Gemäß US-PS 3 517 071 werden Polycarbonate aus Tetraalkylbisphenolen hergestellt, deren Verbindungsglied X polycyclische Struktur besitzt;

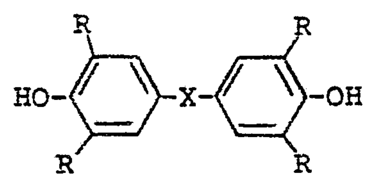 (R = Alkyl)

abgesehen davon, daß die Polycarbonate daraus nicht sehr hochmolekular erhalten werden (I.V. = 0,5 des Beispiels 6 der Tabelle von Spalten 25 und 26 des US-PS 3 517 071), wird bei der Herstellung nach dem Phasengrenzflächenverfahren eine Polycarbonatkonzentration in der organischen Phase von 18 Gew.-%, bezogen auf gesamte organische Phase, bei weitem nicht erreicht.

Gemäß US-PS 3 275 601 werden Polycarbonate nach dem Phasengrenzflächenverfahren hergestellt, wobei jedoch allgemeine Vorschriften bezüglich der erfindungsgemäßen Reaktionskriterien 2 und 3 nicht ausgeführt sind.

Die Beispiele zeigen jedoch, daß im Falle der Polycarbonatherstellung nach dem Phasengrenzflächenverfahren und unter Einsatz von tertiären Aminen das Volumenverhältnis von organischer Phase zu wäßriger Phase deutlich kleiner als das erfindungsgemäße Verhältnis von 1 zu 1,2 ist (siehe Beispiele 13, 17, 18, 22, 25 und 26).

Gemäß US-PS 3 220 975 werden Polycarbonate nach dem Phasengrenzflächenverfahren hergestellt, wobei jedoch keine Polycarbonate auf Basis o,o,o',o'-tetraalkylsubstituierter Diphenole im einzelnen synthetisiert werden, so daß aus dem breiten Rahmen der in US-PS 3 220 975 beschriebenen Reaktionsbedingungen ein Rückschluß auf die optimalen Reaktionskriterien zur Herstellung von Polycarbonaten aus tetraalkylsubstituierten Diphenolen gemäß vorliegender Erfindung nicht geschlossen werden kann, welche für die Herstellung von Polycarbonaten aus Bisphenol A absolut ungünstig sind. Entsprechendes gilt für die Lehre der DE-OS 2 725 967.

Bei dem erfindungsgemäßen Verfahren können offenkettige und cyclische tertiäre Amine als Katalysatoren eingesetzt werden, wie z.B. Triäthylamin, Tripropylamin, Tributylamin, Triamylamin, Trihexylamin, 5-Diäthylaminopentanon-2, N,N-Dimethylcyclohexylamin, N-Äthylpiperidin, N-Propylpiperidin, N-Allylpiperidin.

Vorzugsweise werden teriäre aliphatische Amine, die offenkettig oder cyclisch sein können, eingesetzt. Besonders bevorzugt sind Triäthylamin, Tributylamin und N-Äthylpiperidin.

Die tertiären Amine werden in Mengen von 1 bis 7 Mol-%, bevorzugt von 2 bis 5 Mol-% (bezogen jeweils auf Mole an eingesetzten Diphenolen), verwendet. Von den genannten Mengen sollen 0,01 - 7 Mol-%, bevorzugt 0,1 - 2 Mol-%, bezogen jeweils auf Mole an eingesetzten Diphenolen) schon zur Phosgenierung eingesetzt werden. Im allgemeinen wird nur ein Teil des jeweils einzusetzenden Amins schon vor der Phosgenierung in das Reaktionsgemisch gegeben. Der zweite Teil wird dann erst nach der Phosgenierung zur Beschleunigung

der Aufkondensation zugesetzt. Es kann jedoch auch günstig sein, die gesamte Aminmenge schon bei der Phosgenierung einzusetzen und für die nachfolgende Aufkondensation die Aminmenge nicht mehr zu erhöhen. Der Einsatz von Amin schon für die Phosgenierung führt überraschenderweise zu einer schnelleren Phosgenaufnahme im Zweiphasengemisch und zu einer besseren Phosgenausnutzung. Die Aminzugaben zur Phosgenierung und zur Kondensation können aus gleichen oder unterschiedlichen Aminen bestehen. Auch Amingemische können Verwendung finden.

Bevorzugte Aminkombinationen für die Phosgenierung und Kondensation sind folgende: Triäthylamin/Triäthylamin, N-Äthylpiperidin/N-Äthylpiperidin, Tributylamin/Triäthylamin und Tributylamin/N-Äthylpiperidin.

Die organischen Lösungsmittel, die bei dem erfindungsgemäßen Verfahren zur Herstellung der organischen Phase eingesetzt werden, sollen mit Wasser nicht mischbar und unter den Reaktionsbedingungen inert sein. Solche Lösungsmittel sind beispielsweise Methylenchlorid, Chloroform, 1,2-Dichloräthan, Chlorbenzol, Dichlorbenzol, Chlortoluol und Toluol.

Die Polycarbonatkonzentration in der organischen Phase nach beendeter Polykondensation beträgt bei dem erfindungsgemäßen Verfahren 18 bis 50 Gew.-%, bevorzugt 22 bis 35 Gew.-%, berechnet jeweils für das Gewicht an Polycarbonat pro Gesamtgewicht an organischer Phase.

Zur Herstellung der wäßrigen, die Alkalisalze der Diphenole der Formeln 3 und/oder 4 enthaltenden Phase vor Beginn der Polykondensation wird vorzugsweise Natronlauge oder Kalilauge verwendet. Die pH-Werte der wäßrigen Phase sollen während der Polycarbonatherstellung zwischen etwa 12 und etwa 14 oder auch höher liegen.

Das Verhältnis der Volumina von organischer Phase zu wäßriger Phase nach beendeter Polykondensation soll zwischen 5:1 und 1:1,2, vorzugsweise zwischen 2,5:1 und 1,25:1 liegen. Somit kommt das erfindungsgemäße Verfahren überraschenderweise mit äußerst geringen Volumina an wäßriger Phase pro Mol Diphenolumsatz aus und erzielt hohe Raum-Zeit-Ausbeuten.

Als Volumina der organischen und der wäßrigen Phase werden die Volumina verstanden, die die Phasen nach der Polykondensation besitzen. Die organische Phase umfaßt dann also das organische Lösungsmittel und das darin gelöste Polycarbonat, die wäßrige Phase umfaßt dann das Wasser, die gebildeten Salze und den Alkaliüberschuß.

Die für die Phosgenierung eingesetzte Phosgenmenge, die für das Erreichen hochmolekularer Polycarbonate notwendig ist, beträgt weniger als 170 Mol-%, im allgemeinen sogar weniger als 150 Mol-%, bevorzugt weniger als 135 Mol-%, mindestens jedoch 105 Mol-% (bezogen auf Mole eingesetztes Diphenol). Die Kondensationszeit nach der Phosgenierung, die

notwendig ist, um ausreichend hochmolekulare Polycarbonate ohne Chlorkohlensäureesterendgruppen zu erhalten, beträgt zwischen 0,1 und 1,5 Stunden, im allgemeinen sogar weniger als eine Stunde.

Erfindungsgemäß geeignete Diphenole der Formel 3 sind beispielsweise:

Bis-(3,5-dimethyl-4-hydroxyphenyl)-methan
1,1-Bis-(3,5-dimethyl-4-hydroxyphenyl)-äthan
2,2-Bis-(3,5-dimethyl-4-hydroxyphenyl)-propan
1,1-Bis-(3,5-dimethyl-4-hydroxyphenyl)-propan
2,2-Bis-(3,5-dimethyl-4-hydroxyphenyl)-butan
2,4-Bis-(3,5-dimethyl-4-hydroxyphenyl)-butan
2,4-Bis-(3,5-dimethyl-4-hydroxyphenyl)-2-methylbutan und
3,3-Bis-(3,5-dimethyl-4-hydroxyphenyl)-pentan.

Das erfindungsgemäß geeignete Diphenol der Formel 4 ist 1,1,3,4,6-Pentamethyl-3-(3,5-dimethyl-4-hydroxyphenyl)-indanol-5.

Bevorzugt geeignete Diphenole sind 2,2-Bis-(3,5-dimethyl-4-hydroxyphenyl)-propan und 1,1,3,4,6-Pentamethyl-3-(3,5-dimethyl-4-hydroxyphenyl)-indanol-5.

Nach dem erfindungsgemäßen Verfahren können sowohl ein als auch mehrere Diphenole der Formel 3, gegebenenfalls in Kombination mit dem Diphenol der Formel 4 eingesetzt werden. Bevorzugt gelingt die Herstellung von Homo- oder Copolycarbonaten aus den als bevorzugt geeigneten Diphenolen.

Das erfindungsgemäße Verfahren kann noch dadurch modifiziert werden, daß etwa 5 Mol-%, bezogen auf die jeweils eingesetzten Mole Diphenole der Formeln 3 und 4, andere phenolische Komponenten, die nicht den Formeln 3 und 4 entsprechen, mitverwendet werden.

Die nach dem erfindungsgemäßen Verfahren erhältlichen Polycarbonate besitzen im allgemeinen einen mittleren Polykondensationsgrad $\bar{P}$ von mindestens 35, vorzugsweise von mindestens 45, bezogen auf identische oder nicht identische Struktureinheiten der Formeln 1 und 2, oder ein mittleres Molekulargewicht $\bar{M}w$ (Gewichtsmittel) von mindestens 21 000, vorzugsweise von mindestens 27 000. Nach dem erfindungsgemäßen Verfahren können jedoch auch Polycarbonate mit mittleren Polykondensationsgraden von über 200 erhalten werden, bevorzugt erhältliche mittlere Polykondensationsgrade liegen unter 100.

Die Polykondensationsgrade lassen sich in üblicher Weise durch die Mitverwendung von Kettenbegrenzern einstellen. Geeignete Kettenbegrenzer sind beispielsweise Phenol, Kresol, p-tert.-Butylphenol, 2,6-Dimethylphenol, p-Chlorphenol, p-Bromphenol und andere Phenole. Sie werden in den üblichen Mengen eingesetzt.

Das erfindungsgemäße Verfahren kann durch die Mitverwendung von in der Polycarbonatchemie üblicherweise gebräuchlichen Verzweigern modifiziert werden und somit zur Herstellung von verzweigten Polycarbonaten auf der Basis der Diphenole der Formeln 3 und/oder 4 verwendet werden.

Die Durchführung des erfindungsgemäßen Verfahrens, also Phosgenierung und Polykondensation kann in Aggregaten vorgenommen werden, wie sie für die Polycarbonatherstellung nach dem Zweiphasengrenzflächenverfahren bekannt sind. Die Polykondensation kann

bei Anwendung sehr hoher Polycarbonatkonzentrationen mit Vorteil in Knetern durchgeführt werden.

Die Lösungen der nach dem erfindungsgemäßen Verfahren erhältlichen Polycarbonate in den organischen Lösungsmitteln werden nach bekannten Methoden gereinigt von alkalischen und gegebenenfalls sauren Bestandteilen und nach üblichen Methoden aufgearbeitet. Die Polycarbonate können durch Ausfällen beispielsweise mit Methanol, Äthanol, Propanol, Aceton oder Abdampfen des organischen Lösungsmittels in üblicher Weise isoliert werden.

Die nach dem erfindungsgemäßen Verfahren erhältlichen Polycarbonate finden gemäß DT-OS 2 063 050 (Le A 13 359) bzw. US-PS 3 879 348 und gemäß DT-OS 2 615 038 (Le A 16 842) bzw. US-PS 4 129 612 Verwendung als Formkörper, Folien, Überzüge und Fasern. Sie lassen sich in bekannter Weise abmischen mit Füllstoffen, Verstärkungsstoffen, Effektstoffen, Farbstoffen, Pigmenten und Stabilisatoren.

Die nach dem erfindungsgemäßen Verfahren erhältlichen Polycarbonate sind insbesondere mit Vorteil zur Herstellung von Rohrleitungen für alkalische und saure Lösungen, von hochwertigen elektrischen Bauteilen, von Elektroisolierfolien, von Drahlacken, von Beschichtungen für Kunststoffe, von Gehäusen und von heißdampfsterilisierbaren Geräten geeignet.

Beispiel 1

Synthese eines Polycarbonats aus 2,2-Bis-(3,5-dimethyl-4-hydroxyphenyl)-propan unter folgenden Bedingungen:

1) 1 Mol-% Tri-n-butylamin während der Phosgenierung, 4 Mol-% N-Äthylpiperidin für die Kondensation,
2) Polycarbonatkonzentration 22 %
3) Verhältnis der Volumina organischer Phase/wäßriger Phase ca. 1/0,5
4) 145 Mol-% Phosgen
5) Kondensationszeit 0,75 Stunden.

In 287 ml destilliertem Wasser und 210 ml 50 %iger Natronlauge (3,0 Mol-NaOH) werden unter $N_2$-Durchleiten 284,4 g 2,2-Bis-(3,5-dimethyl-4-hydroxyphenyl)-propan (1 Mol) und 2,8 g Phenol (0,03 Mol) gelöst. Nach Zugabe von 825 ml Methylenchlorid und 1,85 g Tri-n-butylamin werden 143 g Phosgen (1,45 Mol) unter Rühren in das Gemisch eingeleitet. Dann werden 4,52 g N-Äthylpiperidin (0,04 Mol) zugesetzt und 45 Minuten zur Kondensation gerührt. Während der Phosgenierung und Kondensation wird die Temperatur bei 20 - 30°C gehalten. Die Aufarbeitung des gebildeten Polycarbonats erfolgt durch Ansäuern der organischen Phase mit verdünnter $H_3PO_4$ und Waschen mit Wasser. Das nach Eindampfen der organischen Phase und Trocknen erhaltene Polycarbonat ist frei von Chlorkohlensäureesterendgruppen und besitzt eine rel. Viskosität $\eta_{rel.}$ = 1,302 entsprechend einem mittleren Poly-

BAD ORIGINAL

kondensationsgrad $\bar{P}$ von etwa 60 ($\eta_{rel}$ gemessen an 0,5 g Polycarbonat in 100 ml $CH_2Cl_2$-Lösung bei 25°C).

Beispiel 2

Synthese eines Copolycarbonats aus 2,2-Bis-(3,5-dimethyl-4-hydroxyphenyl)-propan und 1,1,3,4,6-Pentamethyl-3-(3,5-dimethyl-4-hydroxyphenyl)-indanol-5 (80/20 Mol-Tle) unter folgenden Bedingungen:

1) 1 Mol-% Tri-n-butylamin während der Phosgenierung
   3 Mol-% Triäthylamin für die Kondensation
2) Polycarbonatkonzentration 30 %
3) Verhältnis der Volumina organischer Phase/wäßriger Phase ca. 1/0,8.
4) 140 Mol-% $COCl_2$
5) Kondensationszeit 0,75 Stunden.

In 447 ml destilliertem Wasser und 205 ml 50 %iger Natronlauge (3,9 Mol NaOH) werden unter $N_2$-Durchleiten 227,5 g 2,2-Bis-(3,5-dimethyl-4-hydroxyphenyl)-propan (0,8 Mol) und 65,3 g 1,1,3,4,6-Pentamethyl-3-(3,5-dimethyl-4-hydroxyphenyl)-indanol-5 (0,2 Mol) und 3,66 g 2,6-Dimethylphenol (0,03 Mol) gelöst. Nach Zugabe von 327 ml Chlorbenzol, 272 ml Methylenchlorid und 1,85 g Tri-n-butylamin werden 138 g Phosgen (1,4 Mol) unter Rühren in das Gemisch eingeleitet. Dann werden 3,03 g Triäthylamin (0,03 Mol) zugesetzt und 45 Minuten zur Kondensation gerührt. Während der Phosgenierung und Kondensation wird eine Temperatur von 20 - 30°C gehalten. Die Aufarbeitung des Copolycarbonats erfolgt wie in Beispiel 1 beschrieben. Das Copolycarbonat ist frei von Chlorkohlensäureesterendgruppen und zeigt eine rel. Viskosität $\eta_{rel.}$ = 1,287, entsprechend einem mittleren Polykondensationsgrad $\bar{P}$ von etwa 58 ($\eta_{rel.}$ gemessen an 0,5 g Polycarbonat in 100 ml $CH_2Cl_2$-Lösung bei 25°C).

Patentansprüche

1. Verfahren zur Herstellung von Polycarbonaten aus bifunktionellen Polycarbonatstruktureinheiten der Formeln 1 und/oder 2,

(1) 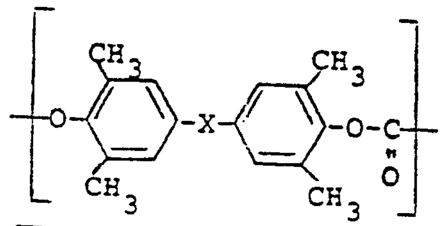

(2) 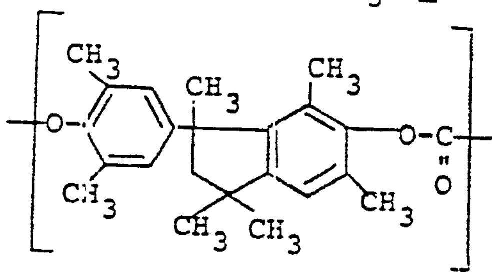

worin X eine Alkylen- oder Alkylidengruppe mit 1 - 5 C-Atomen ist, die einen mittleren Polykondensationsgrad $\bar{P}$ von mindestens 35 haben oder ein mittleres Molekulargewicht $\bar{M}_w$ (Gewichtsmittel) von mindestens 21 000 besitzen, bestehend in der Umsetzung der Alkalisalze von Diphenolen der Formeln 3 und/oder 4, worin X die für Formel 1 genannte Bedeutung hat, mit Phosgen

(3) 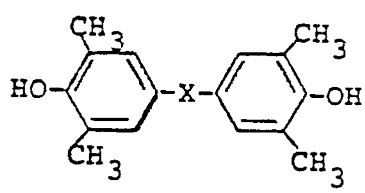

(4) 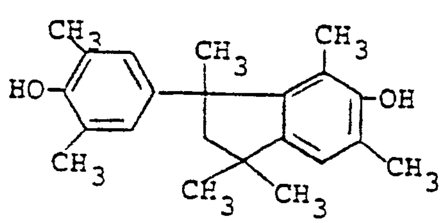

nach dem Phasengrenzflächenverfahren gegebenenfalls unter Mitverwendung von Kettenbegrenzern und gegebenenfalls von Verzweigern, dadurch gekennzeichnet, daß

a) tertiäre Amine in Mengen von 1 bis 7 Mol-%, bezogen auf Mole an eingesetzten Diphenolen der Formeln 3 und/oder 4, eingesetzt werden, daß

b) die Polycarbonatkonzentration in der organischen Phase nach beendeter Polykondensation zwischen 18 und 50 Gew.-% (Gewicht Polycarbonat pro Gesamtgewicht an organischer Phase) beträgt, und daß

c) das Verhältnis der Volumina von organischer Phase zu wäßriger Phase nach beendeter Polykondensation zwischen 5 zu 1 und 1 zu 1,2 liegt.

2. Verfahren gemäß Anspruch 1, dadurch gekennzeichnet, daß tertiäre aliphatische Amine verwendet werden.

3. Verfahren gemäß Ansprüche 1 und 2, dadurch gekennzeichnet, daß tertiäre Amine in Mengen von 2 bis 5 Mol-% eingesetzt werden.

4. Verfahren gemäß Ansprüche 1 bis 3, dadurch gekennzeichnet, daß die Polycarbonatkonzentration in

der organischen Phase nach beendeter Polykondensation zwischen 22 und 35 Gew.-% beträgt.

5. Verfahren gemäß Ansprüche 1 bis 4, dadurch gekennzeichnet, daß das Verhältnis der Volumina von organischer Phase zu wäßriger Phase nach beendeter Polykondensation zwischen 2,5:1 und 1,25:1 liegt.

Europäisches Patentamt

# EUROPÄISCHER RECHERCHENBERICHT

Nummer der Anmeldung
EP 80 10 0104

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 347 395 (BAYER)<br>* Ansprüche 1-4; Seite 6, Spalte 1 *<br>-- | 1-5 |
| D | FR - A - 2 263 267 (BAYER)<br>* Ansprüche 1-4 *<br>---- | 1-5 |

KLASSIFIKATION DER ANMELDUNG (Int.Cl.³)

C 08 G 63/62

RECHERCHIERTE SACHGEBIETE (Int. Cl.³)

C 08 G 63/62

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-05-1980 | DECOCKER |